# FASCICULE DE BREVET EUROPEEN

(11) **EP 3 391 695 B1**
(45) Date de publication et mention de la délivrance du brevet: **17.03.2021**
(21) Numéro de dépôt: 16825830.9
(22) Date de dépôt: 12.12.2016
(51) Int. Cl.: H04W 64/00, G01S 5/02, G01S 19/48, H04W 48/18, G01S 19/34, G01S 3/02, H04W 88/06

(54) **PROCÉDÉ DE GESTION DU FONCTIONNEMENT D'UN OBJET CONNECTÉ**
VERFAHREN ZUR VERWALTUNG DES BETRIEBS EINES ANGESCHLOSSENEN GEGENSTANDES
METHOD FOR MANAGING THE OPERATION OF A CONNECTED OBJECT

(30) Priorité: 18.12.2015 FR 1562861
(43) Date de publication de la demande: 24.10.2018
(73) Titulaire: ORANGE, 75015 Paris (FR)
(72) Inventeur: CAZOULAT, Renaud, 35760 Saint Gregoire (FR); CONAN, Martin, 35510 Cesson Sevigne (FR); GAILLET, Thierry, 92330 Sceaux (FR)
(86) Numéro de dépôt international: PCT/FR2016/053344
(87) Numéro de publication internationale: WO 2017/103412

(56) Documents cités:
- WO-A1-2014/185976
- US-A1- 2010 271 260
- US-A1- 2014 274 225

## Description

### Domaine technique

L'invention se rapporte au domaine général des télécommunications.

L'invention se rapporte à un procédé de gestion du fonctionnement d'un dispositif de traitement de données, dit premier dispositif, du type objet connecté. L'invention se rapporte plus particulièrement à un procédé de gestion de la consommation électrique d'un objet connecté le but étant d'augmenter son autonomie.

Rappelons qu'un objet connecté est un dispositif électronique connecté sans fil partageant des informations avec au moins un autre dispositif de traitement de données, dit second dispositif, du type passerelle domestique, ordinateur, tablette électronique, ou smartphone ou autre dispositif équivalent capable de communiquer et de traiter des données. Dans l'exemple qui suit, le second dispositif sera un smartphone.

### Etat de la technique

Les objets connectés sont omniprésents dans la vie de tous les jours ; la conséquence est une augmentation exponentielle de la consommation globale en électricité. En effet, selon l'Agence Internationale de l'Energie (AIE), à l'échelle mondiale, les équipements électriques et électroniques connectés ont consommé 400 TWh (térawattheures) d'électricité en 2013, uniquement lorsqu'ils étaient en veille.

Aussi, les objets connectés sont dotés d'un moyen de communication dont la portée est limitée en distance, aussi appelé moyen de communication de courte portée. Un tel moyen de communication de courte portée est par exemple la technique radio courte distance Bluetooth. L'avantage de la technologie Bluetooth est qu'elle permet non seulement une communication mais aussi une localisation de l'objet sans entraîner une consommation excessive de l'objet.

Avec un moyen de communication de courte portée, au-delà d'une certaine distance, une communication n'est plus possible ; la communication est rompue. Or, certaines applications requièrent une localisation de l'objet après rupture de la communication. Une application est par exemple une application de suivi qui permet de suivre le déplacement de l'objet. Par exemple, lorsque l'objet est installé dans une voiture, la localisation de l'objet permet de suivre le déplacement de l'objet et indirectement celui de la voiture, par exemple suite à un vol de la voiture.

Une solution connue consiste à équiper l'objet d'un autre moyen de localisation ayant une portée plus grande que le moyen de communication de courte portée. La demande de brevet US 2014/0274225 enseigne l'utilisation de plusieurs moyens de localisation ayant des portées différentes. Un tel moyen est par exemple un réseau cellulaire (GSM, 4G ou autre réseau équivalent) ; cependant, ce type de réseau entraîne pour l'objet une consommation électrique beaucoup plus importante que pour un réseau de courte portée. Cela est néfaste pour l'objet qui voit son autonomie en électricité diminuer rapidement.

Un besoin est donc de localiser l'objet au-delà du rayon de couverture du réseau de courte portée tout en limitant la consommation électrique dans l'objet. La demande de brevet US2014274225 enseigne des solutions ayant un impact négatif sur la consommation électrique de l'objet.

L'invention offre une solution à ce besoin.

### L'invention

Selon un aspect fonctionnel , l'invention se rapporte à un procédé de gestion du fonctionnement d'un dispositif de traitement de données tel que défini dans la revendication 1.

Suite à la rupture de la communication, du fait que les deux dispositifs sont trop éloignés l'un de l'autre, le deuxième dispositif vient contrôler le fonctionnement du module de localisation du premier dispositif. Comme on l'a vu précédemment, l'utilisation d'un réseau ayant une portée importante consomment généralement plus que les moyens de communication de courte portée. Le deuxième dispositif contrôle ainsi à distance le fonctionnement du premier dispositif et donc la consommation en électricité du premier dispositif.

Le premier dispositif émet via le deuxième canal plusieurs messages périodiquement avec une périodicité donnée ; dans cette configuration, le premier dispositif reçoit depuis le second dispositif une commande de modification de la périodicité d'émission des messages. Cette caractéristique permet d'influer, depuis le second dispositif, sur le fonctionnement du premier dispositif et donc sur sa consommation électrique comme on le verra dans la suite de la description.

Précisons que l'étape de réception fait référence à un moyen de localisation utilisé ; cependant plusieurs moyens de localisation peuvent être utilisés ; dans cette configuration le deuxième dispositif est apte à émettre, si plusieurs moyens sont utilisés, des commandes aptes à modifier les fonctionnements des différents modules de localisation utilisés, respectivement.

Selon un mode de mise en œuvre particulier de l'invention, le module de localisation est inactif avant la rupture ; suite à la rupture le module de localisation est activé. De cette manière, le module de localisation n'est activé que lorsqu'il y a un besoin de localiser le premier dispositif. Rappelons que désactiver un module consiste à ne plus alimenter ce module.

Selon un autre mode de mise en œuvre particulier de l'invention, qui pourra être mis en œuvre alternativement ou cumulativement avec le précédent, suite à la rupture, et avant l'étape de réception, le premier dispositif émet un message au deuxième dispositif via le deuxième canal. Ce message permet au deuxième dispositif d'être averti de la rupture de la communication. Le contrôle du premier dispositif par le deuxième dispositif peut ainsi démarrer après réception du message par le deuxième dispositif. En particulier, après réception du message, le deuxième dispositif peut émettre la demande d'activation du module de localisation, en référence au précédent mode de mise en œuvre.

Selon encore un autre mode de mise en œuvre particulier de l'invention, qui pourra être mis en œuvre alternativement ou cumulativement avec les précédents, suite à l'activation d'un module de localisation, dit premier module de localisation, le premier dispositif reçoit depuis le second dispositif une requête de demande d'activation d'un autre module de localisation, dit deuxième module de localisation, sur le premier dispositif. Ce mode permet d'obtenir une localisation par exemple plus précise que celle obtenue avec le premier moyen de localisation; ce dernier pouvant être un moyen de localisation défini par défaut ; ou choisi à un instant donné et non adapté par la suite.

Selon encore un autre mode de mise en œuvre particulier de l'invention, qui pourra être mis en œuvre alternativement ou cumulativement avec les précédents, le premier dispositif reçoit depuis le second dispositif une commande de limitation apte à limiter le nombre de localisations à obtenir par le module de localisation. Selon encore un autre mode de mise en œuvre particulier de l'invention, qui pourra être mis en œuvre alternativement ou cumulativement avec les précédents, le premier dispositif reçoit depuis le second dispositif une commande de limitation apte à limiter à une plage temporelle l'utilisation du module de localisation. Le fait de limiter le nombre de localisations à obtenir ou l'utilisation du module sur une plage temporelle contribue à réduire la consommation en électricité dans le premier dispositif, en particulier lorsque le moyen de localisation utilisé entraîne une consommation importante.

Selon encore un autre mode de mise en œuvre particulier de l'invention, qui pourra être mis en œuvre alternativement ou cumulativement avec les précédents, le module de localisation obtient une localisation à la base du deuxième canal. Le deuxième canal sert ainsi à la fois à la communication et à l'obtention de la localisation. Dans le cas d'un réseau cellulaire comprenant des stations de base BTS, ce dernières sont utilisées pour l'obtention de la localisation.

Selon un aspect matériel, l'invention se rapporte à un dispositif, dit premier dispositif, tel que défini dans la revendication 8.

Selon un autre aspect matériel, l'invention se rapporte à un programme d'ordinateur apte à être mis en œuvre sur un dispositif tel que défini dans la ci-dessus, le programme comprenant des instructions de code qui, lorsqu'il est exécuté par un processeur, réalise les étapes du procédé définies ci-dessus.

Selon un autre aspect matériel, l'invention se rapporte à un support de données sur lequel a été mémorisée au moins une série d'instructions de code de programme pour l'exécution d'un procédé de l'invention défini ci-dessus.

Selon un autre aspect fonctionnel, l'invention a trait à un procédé de gestion du fonctionnement d'un dispositif de traitement de données, dit premier dispositif, tel que défini dans la revendication 11.

Selon un autre aspect matériel, l'invention se rapporte à un dispositif de traitement de données, dit deuxième dispositif, tel que défini dans la revendication 12.

Selon un autre aspect matériel, l'invention se rapporte à un programme d'ordinateur apte à être mis en œuvre sur un dispositif, dit deuxième dispositif ci-dessus, le programme comprenant des instructions de code qui, lorsqu'il est exécuté par un processeur, réalise les étapes du procédé s'exécutant sur le deuxième dispositif tel que défini ci-dessus.

Selon un autre aspect matériel, l'invention se rapporte un support de données sur lequel a été mémorisée au moins une série d'instructions de code de programme pour l'exécution d'un procédé s'exécutant sur le deuxième dispositif tel que défini ci-dessus

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
Les figures 2 et 3 représentent des vues schématiques de l'architecture du premier et du deuxième dispositif.
La figure 4 est un algorithme illustrant le principe de l'invention.
Les figures 5 et 6 sont des vues schématiques des échanges réalisés relativement à deux variantes possibles respectivement.

### Description détaillée d'un exemple de réalisation illustrant l'invention

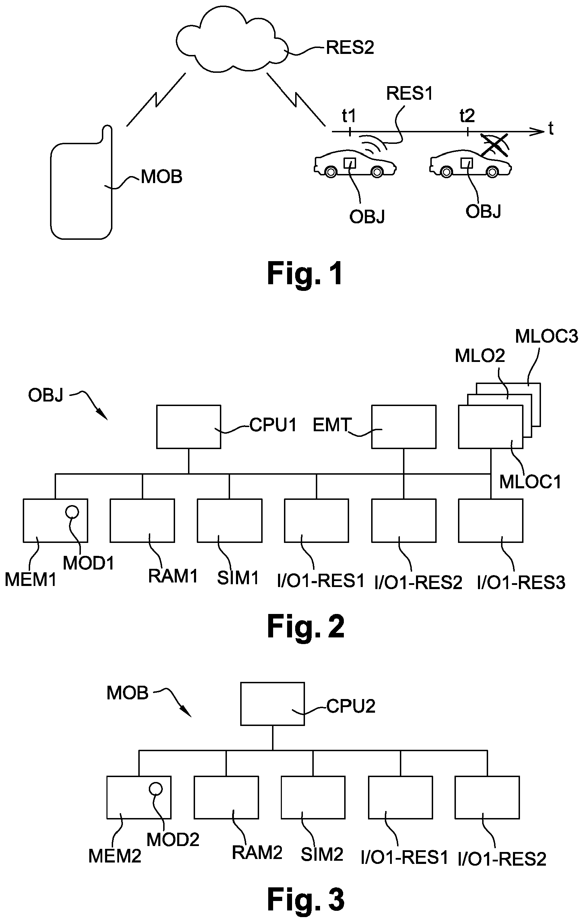

La figure 1 représente un système SYS comprenant des terminaux à savoir un dispositif OBJ, dit premier dispositif, et un dispositif MOB, dit second dispositif.

En référence aux figures 2 et 3, les dispositifs visés ci-dessus ont une architecture matérielle d'un ordinateur conventionnel. Ils comportent chacun notamment un processeur (CPU1,CPU2), une mémoire vive de type RAM et une mémoire morte (MEM1,MEM2). A noter que les moyens de stockage MEM1 et MEM2 décrits ci-dessus sont quelconques ; ceux-ci sont par exemple une mémoire de type Flash, ROM, etc.

Le premier dispositif OBJ est apte à recevoir des données issues du second dispositif MOB via un premier canal de communication RES1. Ce canal est par exemple un réseau de courte portée. Un réseau de courte portée se rapporte ici à un réseau ayant une couverture limitée en distance. Dans ce contexte, le premier dispositif OBJ peut émettre des données en deçà d'une distance donnée, par l'intermédiaire du réseau de courte portée, au second dispositif MOB. Un réseau de courte portée est par exemple un réseau RFiD (Radio Frequency Identification), un réseau Bluetooth, ou tout autre réseau équivalent. A cet effet, le premier dispositif OBJ est équipé d'un émetteur de données EMT et le deuxième dispositif MOB inclut un capteur apte à recevoir les données via ce réseau de courte portée.

Précisons que la portée d'un réseau se définit par la plus longue distance sur laquelle un message peut être transmis et reçu. On parle aussi de zone de couverture radio. Au-delà de cette distance, un message transmis ne peut être reçu.

Dans notre exemple, outre la possibilité de communiquer via un réseau de courte portée, le premier dispositif OBJ inclut aussi des moyens de communications ayant une portée plus importante qu'un réseau de courte portée ; dans notre exemple, ce deuxième canal de communication permet à l'objet de communiquer quel que soit le lieu où il se trouve. Un tel canal de communication est par exemple un réseau de type GSM ou équivalent. Pour cela, dans notre exemple, le second dispositif est équipé d'un module d'abonné du type carte SIM (sigle anglo-saxon de « Subscriber Identity Module ») permettant de communiquer via un réseau smartphone de type GSM ou équivalent.

L'invention peut être mise en œuvre avec un module de localisation ou plusieurs modules. Dans notre exemple, le premier dispositif OBJ est équipé de plusieurs modules de localisation (MLOC1,MLOC2,MLOC3) permettant d'obtenir des localisations selon différentes méthodes de localisation, chaque méthode entraînant des consommations électriques respectives. Ces modules peuvent être indifféremment, un module de localisation utilisant le positionnement par satellite GPS (Global Positionning System), un module de localisation utilisant les réseaux de téléphonie smartphone tel que le différentiel temps plus connu sous le sigle EOTD (Enhanced Observed Time Différence), un module de localisation utilisant un système d'identification de cellule GSM, la triangulation, etc.

Dans le présent texte, une localisation obtenue par les modules de localisation MLOC1, MLOC2, et MLOC3 seront référencés LOC1, LOC2, et LO3, respectivement.

A noter qu'un module de localisation peut être interne à l'objet ou en partie externe à l'objet. Dans ce dernier cas, la partie interne à l'objet requiert une obtention d'une localisation sur un dispositif externe à l'objet. L'objet reçoit en retour sa localisation.

A noter qu'un module de localisation est soit matériel soit logiciel ; dans ce dernier cas, le module est stocké dans une mémoire de l'objet.

Comme expliqué ci-dessus, chaque module offre une précision donnée et requiert des ressources physiques et logicielles différentes et engendre en conséquence une consommation électrique plus ou moins importante. Dans notre exemple, le premier canal RES1 est un canal Bluetooth, et le deuxième canal RES2 est un réseau 4G. L'utilisation d'un réseau de courte portée pour l'obtention d'une localisation requiert une consommation électrique moindre qu'un réseau GSM. Aussi, l'utilisation du module GPS bien que plus précise que le module 4G entraîne une consommation plus importante que l'utilisation du réseau 4G.

Le premier microprocesseur CPU1 est apte à communiquer avec des moyens d'entrée/sortie I/O1 RES-1 aptes à recevoir et à émettre des données sur le réseau de courte portée RES1 ; avec des moyens d'entrée sortie I/O1 RES-2 pour la communication avec le réseau smartphone RES2.

Dans notre exemple, l'objet comprend un récepteur GPS capable de recevoir des signaux issus de satellites et obtenir la localisation de l'objet à la base de ces signaux. Ce module de localisation est référence MLO3 sur la figure 2.

L'objet connecté peut être bracelet connecté, une montre connectée, ou équivalent. L'objet peut être installé dans un dispositif tel qu'une voiture, valise, etc., à des fins de localisation du dispositif.

Le deuxième dispositif MOB est apte à recevoir des données issues du premier dispositif via le réseau de courte portée décrit ci-dessus.

Dans notre exemple, comme le premier dispositif, le second dispositif MOB est aussi équipé d'un module d'abonné du type carte SIM (Subscriber Identity Module) permettant de communiquer via un réseau smartphone de type GSM ou équivalent.

Le deuxième microprocesseur CPU2 du deuxième dispositif MOB illustré au moyen d'un smartphone est aussi apte à communiquer avec des moyens d'entrée/sortie I/O MOB-1 aptes à recevoir et à émettre des données sur le réseau de courte portée RES1 ; et avec des moyens d'entrée sortie I/O MOB-2 pour la communication avec le réseau RES2.

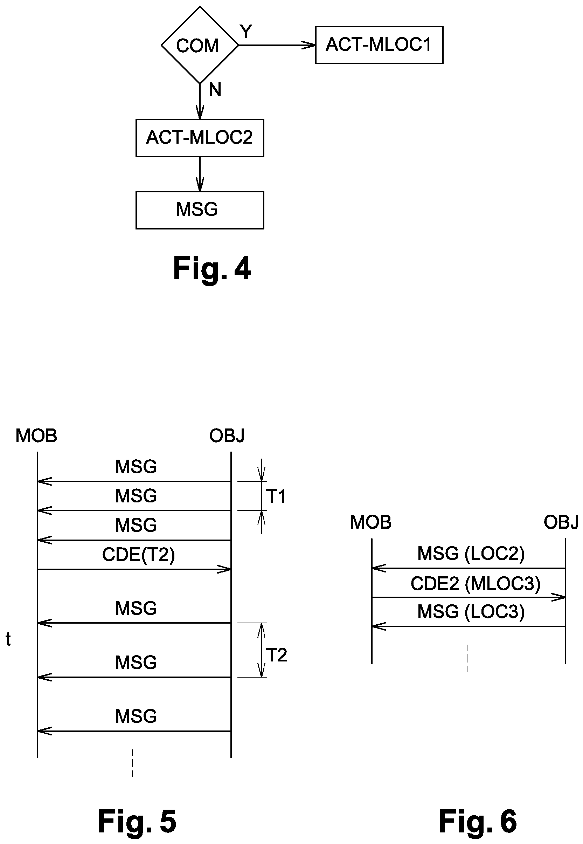

L'invention va être décrite en référence à la figure 4 ; celle-ci représente un algorithme comprenant les étapes du procédé de l'invention.

L'objet OBJ comprend un module de vérification MOD1 ayant pour fonction de vérifier l'état de la connexion du réseau de courte de portée. Ce module MOD1 est par exemple stocké dans la mémoire MEM1.

Lors d'une première étape optionnelle, les dispositifs s'apparient à la fois sur le premier réseau RES1, à savoir le réseau Bluetooth, et sur le deuxième réseau à savoir le réseau GSM. Par appariement, on entend un ensemble d'opérations qui permettent à deux dispositifs de se reconnaître dans le but de communiquer ensemble sur un canal donné de communication

Ensuite, un module de vérification MOD1 vérifie si une communication COM est possible entre les deux dispositifs via le réseau de courte portée ; par exemple périodiquement. Alternativement, cette vérification peut aussi être faite sans périodicité à des instants donnés.

Si la communication est possible (Y) via le réseau de courte portée (instant t1 sur la figure 1), l'objet reste dans un état dans lequel seul le module de localisation MLOC1, à savoir le module qui utilise le réseau Bluetooth, est activé. Les autres modules localisation MLOC2 et MLOC3 sont désactivés DES pour ne pas consommer d'énergie électrique. Une désactivation consiste à ne pas alimenter le module en question.

Si la communication n'est plus possible (N), représenté par l'instant t2 sur la figure 1, parce que la communication est rompue sur le premier réseau Bluetooth, le module MOD1 active ACT le module de localisation MLOC2 ; aussi, de préférence, le premier module MLOC1 et le troisième MLOC3 sont désactivés pour réduire la consommation sur l'objet OBJ.

Une fois le deuxième module de localisation MLOC2 activé, de préférence, le module d'émission émet un message MSG via le deuxième réseau RES2 à destination du smartphone MOB. Ce message permet d'informer le smartphone de la rupture de la communication entre l'objet et le smartphone. Le smartphone peut à ce moment prendre le contrôle de l'objet pour modifier le fonctionnement de l'objet.

Le message peut aussi être transmis, en lieu et place du réseau 4G (ou équivalent), via un réseau étendu basé sur le protocole LoRaWAN (acronyme pour Long Range Wide-area network que l'on peut traduire par « réseau étendu à longue portée »). Rappelons que ce dernier permet la communication à bas débit, par radio, d'objets communiquant selon la technologie LoRa et connectés à internet via des passerelles.

A ce stade, le module de localisation MLOC2 est apte à requérir une localisation de l'objet OBJ. Après obtention d'une localisation LOC2, le module MOD1 inclut dans un message MSG la localisation LOC2 obtenue et transmet le message incluant cette localisation au smartphone MOB.

Ensuite, le smartphone MOB reçoit le message MSG(LOC2) et obtient la localisation LOC2 de l'objet. En cas de perte ou de vol, un utilisateur du smartphone sait donc que l'objet OBJ est hors de portée du smartphone et sait où se trouve l'objet OBJ.

Le contrôle peut s'effectuer de différentes manières. Par exemple, le smartphone peut requérir via le deuxième réseau une diminution de la périodicité d'émission des messages MSG, ou requérir une obtention d'une localisation plus précise, par exemple le troisième module MLOC3, ou pour sélectionner un moyen de localisation peu consommateur en énergie, etc.

Les figures 5 et 6 illustrent deux variantes respectivement. Sur ces deux figures sont représentés deux axes correspondants au smartphone et à l'objet respectivement ainsi que l'échange de données qui a lieu entre ces deux dispositifs. Un axe temporel indique le sens d'exécution des étapes. Sur ces figures 5 et 6, un échange de données est symbolisé par une flèche ayant une origine et une extrémité, l'origine étant associée à l'émetteur d'un message, l'extrémité étant associée au destinataire du message.

Selon une première variante, en référence à la figure 5, suite à la rupture de la communication entre l'objet et le smartphone relativement au premier réseau Bluetooth, l'objet émet plusieurs messages MSG avec une périodicité donnée T1 ; ce message incluant une localisation LOC2 obtenir grâce au deuxième module de localisation MLOC2. Selon cette première variante, suite à la réception d'au moins un message MSG, le smartphone émet une commande CDE1 requérant une modification du comportement de l'objet, en l'espèce une diminution ou une augmentation de la périodicité de l'émission des messages MSG. Dans notre exemple, une augmentation est demandée pour diminuéer la consommation électrique dans l'objet. Sur la figure 3, on voit la périodicité augmenter d'une périodicité T1 à une périodicité T2 suite à l'émission de la commande CDE1(T1). Cette variante est utile lorsque la communication est rompue volontairement par exemple par l'utilisateur ; dans ce cas la périodicité est augmentée pour ne pas consommer d'énergie inutilement. Aussi, le smartphone peut commander à l'objet de ne plus émettre de message.

A l'inverse, la périodicité peut être diminuée par exemple en cas de perte de l'objet. En effet, si l'objet est installé dans une valise, une voiture, l'utilisateur souhaitera recevoir rapidement l'évolution de la localisation de l'objet.

Rappelons qu'une période est la durée d'un phénomène qui se répète au cours d'un phénomène périodique. C'est une grandeur qui se note T et qui peut s'exprimer en seconde, en heure ou en tout autre unité de temps.

Selon une deuxième variante, le smartphone émet une requête ou commande CDE2(MLOC3) requérant une modification du comportement de l'objet, en l'espèce une modification du module de localisation utilisé pour localiser l'objet. Sur la figure 4, l'objet émet une location LOC2 dans un premier temps, obtenue grâce au module de localisation MLOC2. Suite à l'émission de la commande CDE2, l'objet émet un message MSG(LOC3) incluant une localisation LOC3 obtenue au moyen d'un autre moyen de localisation.

En reprenant l'exemple de la voiture volée, la précision de la localisation peut être souhaitée. Dans cette configuration, le module GPS peut être activé pour l'obtention d'une localisation GPS. Aussi le deuxième module MLOC2 peut être désactivé en parallèle. A cet effet, le smartphone émet une requête de modification CDE2(MLOC3) du module de localisation

Le smartphone MOB contrôle donc la précision de la localisation et la consommation de l'objet en sélectionnant judicieusement le module de localisation. En effet, comme indiqué ci-dessus, chaque moyen de localisation est plus ou moins précis et consomme plus ou moins d'énergie.

Selon cette même deuxième variante, la commande CDE2(MLOC3) inclut une limitation de manière à limiter en nombre les messages MSG ou à limiter dans le temps l'utilisation du module de localisation. Hors de la plage temporelle, le module est désactivé. Par exemple, le troisième module ne transmet qu'une seule localisation GPS ; ou bien le troisième module ne transmet des localisations GPS que sur une plage temporelle donnée par exemple pendant 10 minutes.

Précisons enfin ici que le terme module utilisé ci-dessus peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion du fonctionnement d'un dispositif de traitement de données (OBJ), dit premier dispositif, apte à communiquer avec un autre dispositif de traitement de données, dit second dispositif, au travers de canaux de communication dont un premier canal de communication (RES1) ayant une première portée et un deuxième canal de communication (RES2) ayant une deuxième portée plus grande que la première, le premier dispositif incluant au moins un module de localisation (MLOC2,MLOC3) apte à être utilisé lorsque les dispositifs sont hors de portée l'un de l'autre relativement au premier canal (RES1), le module étant apte à émettre via le deuxième canal une pluralité de messages incluant les localisations (LOC2) de l'objet avec une périodicité donnée, **caractérisé en ce que**, lorsque les dispositifs (OBJ,MOB) sont hors de portée l'un de l'autre relativement au premier canal, le procédé comprend, dans le premier dispositif (OBJ)
- une étape de réception au cours de laquelle le premier dispositif (OBJ) reçoit, du deuxième dispositif (MOB), via le deuxième canal, au moins une commande de modification de la périodicité d'émission (T1) des messages (MSG) incluant les localisations (LOC2) de l'objet,
- une étape de transmission, via le deuxième canal, des messages selon la périodicité modifiée.

2. Procédé de gestion selon la revendication 1, **caractérisé en ce que**, avant la rupture, le module de localisation est inactif, et **en ce qu'**il est activé suite à la rupture.

3. Procédé de gestion selon la revendication 1, **caractérisé en ce que**, suite à la rupture, et avant l'étape de réception, le premier dispositif émet un message (MSG) au deuxième dispositif via le deuxième canal

4. Procédé de gestion selon la revendication 2, caractérisé en ce suite à l'activation du module de localisation, dit premier module de localisation, le premier dispositif reçoit depuis le second dispositif (MOB) une requête de demande d'activation d'un autre module de localisation, dit deuxième module de localisation, sur le premier dispositif.

5. Procédé selon la revendication 1, **caractérisé en ce que** le premier dispositif (OBJ) reçoit depuis le second dispositif (MOB) une commande de limitation apte à limiter le nombre de localisations à obtenir par le module de localisation.

6. Procédé selon la revendication 1, **caractérisé en ce que** le premier dispositif (OBJ) reçoit depuis le second dispositif (MOB) une commande de limitation apte à limiter à une plage temporelle l'utilisation du module de localisation.

7. Procédé selon la revendication 1, **caractérisé en ce que** le module de localisation obtient une localisation à la base du deuxième canal.

8. Dispositif (OBJ), dit premier dispositif, apte à communiquer avec un autre dispositif de traitement de données, dit second dispositif, au travers de canaux de communication dont un premier canal de communication ayant une première portée et un deuxième canal de communication ayant une deuxième portée plus grande que la première, le premier dispositif incluant au moins un module de localisation (MLOC2,MLOC3) apte à être utilisé lorsque les dispositifs sont hors de portée l'un de l'autre relativement au premier canal, le module étant apte à émettre via le deuxième canal une pluralité de messages incluant les localisations (LOC2) de l'objet avec une périodicité donnée, **caractérisé en ce qu'**il comprend
- un module de réception apte à recevoir, lorsque les dispositifs sont hors de portée l'un de l'autre relativement au premier canal, depuis le deuxième dispositif, au moins une commande de modification de la périodicité d'émission (T1) des messages (MSG) incluant les localisations (LOC2) de l'objet,
- un module de transmission apte à transmettre, via le deuxième canal, au moins un message selon la périodicité modifiée.

9. programme d'ordinateur apte à être mis en œuvre sur un dispositif tel que défini dans la revendication 8, le programme comprenant des instructions de code qui, lorsqu'il est exécuté par un processeur, réalise les étapes du procédé définies dans la revendication 1.

10. Support de données sur lequel a été mémorisée au moins une série d'instructions de code de programme pour l'exécution d'un procédé selon la revendication 1.

11. Procédé de gestion du fonctionnement d'un dispositif de traitement de données (OBJ), dit premier dispositif, apte à communiquer avec un autre dispositif de traitement de données, dit second dispositif, au travers de canaux de communication dont un premier canal de communication ayant une première portée et un deuxième canal de communication ayant une deuxième portée plus grande que la première, le premier dispositif incluant au moins un module de localisation (MLOC2,MLOC3) apte à être utilisé lorsque les dispositifs sont hors de portée l'un de l'autre relativement au premier canal, **caractérisé en ce que**, lorsque les dispositifs sont hors de portée l'un de l'autre relativement au premier canal, le procédé comprend, dans le deuxième dispositif (MOB)
- une étape de transmission au cours de laquelle le deuxième dispositif transmet au premier dispositif, via le deuxième canal, au moins une commande de modification de la périodicité d'émission (T1) des messages (MSG) incluant les localisations (LOC2) de l'objet,
- une étape de réception, via le deuxième canal, des messages selon la périodicité modifiée.

12. Dispositif de traitement de données (MOB), dit deuxième dispositif, apte à communiquer avec un autre dispositif de traitement de données, dit premier dispositif, au travers de canaux de communication dont un premier canal de communication ayant une première portée et un deuxième canal de communication ayant une deuxième portée plus grande que la première, le premier dispositif incluant un module de localisation apte à être utilisé lorsque les dispositifs sont hors de portée l'un de l'autre relativement au premier canal, **caractérisé en ce qu'**il comprend,
- un module de transmission apte à émettre, lorsque les dispositifs sont hors de portée l'un de l'autre relativement au premier canal via le deuxième canal, à destination du premier dispositif au moins une commande de modification de la périodicité d'émission (T1) des messages (MSG) incluant les localisations (LOC2) de l'objet,
- un module de réception apte à recevoir, via le deuxième canal, des messages selon la périodicité modifiée.

13. programme d'ordinateur apte à être mis en œuvre sur un dispositif tel que défini dans la revendication 12, le programme comprenant des instructions de code qui, lorsqu'il est exécuté par un processeur, réalise les étapes du procédé définies dans la revendication 11.

14. Support de données sur lequel a été mémorisée au moins une série d'instructions de code de programme pour l'exécution d'un procédé selon la revendication 11.

## Patentansprüche

1. Verfahren zur Verwaltung des Betriebs einer Datenverarbeitungsvorrichtung (OBJ), "erste Vorrichtung" genannt, die in der Lage ist, mit einer anderen Datenverarbeitungsvorrichtung, "zweite Vorrichtung" genannt, über Kommunikationskanäle zu kommunizieren, von denen ein erster Kommunikationskanal (RES1) eine erste Reichweite aufweist und ein zweiter Kommunikationskanal (RES2) eine zweite Reichweite aufweist, die größer als die erste ist, wobei die erste Vorrichtung wenigstens ein Lokalisierungsmodul (MLOC2, MLOC3) aufweist, das verwendbar ist, wenn sich die Vorrichtungen in Bezug auf den ersten Kanal (RES1) außer Reichweite voneinander befinden, wobei das Modul in der Lage ist, über den zweiten Kanal eine Vielzahl von Nachrichten, welche die Ortsbestimmungen (LOC2) des Objekts enthalten, mit einer gegebenen Periodizität zu senden, **dadurch gekennzeichnet, dass**, wenn sich die Vorrichtungen (OBJ, MOB) in Bezug auf den ersten Kanal außer Reichweite voneinander befinden, das Verfahren umfasst, in der ersten Vorrichtung (OBJ):
- einen Schritt des Empfangs, in welchem die erste Vorrichtung (OBJ) von der zweiten Vorrichtung (MOB) über den zweiten Kanal wenigstens einen Befehl zur Änderung der Periodizität des Sendens (T1) der Nachrichten (MSG), welche die Ortsbestimmungen (LOC2) des Objekts enthalten, empfängt,
- einen Schritt des Sendens, über den zweiten Kanal, der Nachrichten gemäß der geänderten Periodizität.

2. Verfahren zur Verwaltung nach Anspruch 1, **dadurch gekennzeichnet, dass** vor der Unterbrechung das Lokalisierungsmodul inaktiv ist, und dadurch, dass es im Anschluss an die Unterbrechung aktiviert wird.

3. Verfahren zur Verwaltung Anspruch 1, **dadurch gekennzeichnet, dass** im Anschluss an die Unterbrechung und vor dem Schritt des Empfangs die erste Vorrichtung eine Nachricht (MSG) an die zweite Vorrichtung über den zweiten Kanal sendet.

4. Verfahren zur Verwaltung nach Anspruch 2, **dadurch gekennzeichnet, dass** im Anschluss an die Aktivierung des Lokalisierungsmoduls, "erstes Lokalisierungsmodul" genannt, die erste Vorrichtung von der zweiten Vorrichtung (MOB) eine Anforderung der Aktivierung eines weiteren Lokalisierungsmoduls, "zweites Lokalisierungsmodul" genannt, an der ersten Vorrichtung empfängt.

5. Verfahren nach Anspruch 1, **dadurch gekennzeichnet, dass** die erste Vorrichtung (OBJ) von der zweiten Vorrichtung (MOB) einen Begrenzungsbefehl empfängt, der geeignet ist, die Anzahl der Ortsbestimmungen, die durch das Lokalisierungsmodul vorzunehmen sind, zu begrenzen.

6. Verfahren nach Anspruch 1, **dadurch gekennzeichnet, dass** die erste Vorrichtung (OBJ) von der zweiten Vorrichtung (MOB) einen Begrenzungsbefehl empfängt, der geeignet ist, einen zeitlichen Bereich der Verwendung des Lokalisierungsmoduls zu begrenzen.

7. Verfahren nach Anspruch 1, **dadurch gekennzeichnet, dass** das Lokalisierungsmodul eine Standortbestimmung auf der Basis des zweiten Kanals vornimmt.

8. Vorrichtung (OBJ), "erste Vorrichtung" genannt, die in der Lage ist, mit einer anderen Datenverarbeitungsvorrichtung, "zweite Vorrichtung" genannt, über Kommunikationskanäle zu kommunizieren, von denen ein erster Kommunikationskanal eine erste Reichweite aufweist und ein zweiter Kommunikationskanal eine zweite Reichweite aufweist, die größer als die erste ist, wobei die erste Vorrichtung wenigstens ein Lokalisierungsmodul (MLOC2, MLOC3) aufweist, das verwendbar ist, wenn sich die Vorrichtungen in Bezug auf den ersten Kanal außer Reichweite voneinander befinden, wobei das Modul in der Lage ist, über den zweiten Kanal eine Vielzahl von Nachrichten, welche die Ortsbestimmungen (LOC2) des Objekts enthalten, mit einer gegebenen Periodizität zu senden, **dadurch gekennzeichnet, dass** sie umfasst:
- ein Empfangsmodul, das geeignet ist, wenn sich die Vorrichtungen in Bezug auf den ersten Kanal außer Reichweite voneinander befinden, von der zweiten Vorrichtung wenigstens einen Befehl zur Änderung der Periodizität des Sendens (T1) der Nachrichten (MSG) zu empfangen, welche die Ortsbestimmungen (LOC2) des Objekts enthalten,
- ein Sendemodul, das geeignet ist, über den zweiten Kanal wenigstens eine Nachricht gemäß der geänderten Periodizität zu senden.

9. Computerprogramm, welches geeignet ist, auf einer Vorrichtung, wie in Anspruch 8 definiert, ausgeführt zu werden, wobei das Programm Codeanweisungen umfasst, die, wenn sie von einem Prozessor ausgeführt werden, die Schritte des Verfahrens realisieren, die in Anspruch 1 definiert sind.

10. Datenträger, auf welchem wenigstens eine Reihe von Programmcodeanweisungen für die Ausführung eines Verfahrens nach Anspruch 1 gespeichert ist.

11. Verfahren zur Verwaltung des Betriebs einer Datenverarbeitungsvorrichtung (OBJ), "erste Vorrichtung" genannt, die in der Lage ist, mit einer anderen Datenverarbeitungsvorrichtung, "zweite Vorrichtung" genannt, über Kommunikationskanäle zu kommunizieren, von denen ein erster Kommunikationskanal eine erste Reichweite aufweist und ein zweiter Kommunikationskanal eine zweite Reichweite aufweist, die größer als die erste ist, wobei die erste Vorrichtung wenigstens ein Lokalisierungsmodul (MLOC2, MLOC3) aufweist, das verwendbar ist, wenn sich die Vorrichtungen in Bezug auf den ersten Kanal außer Reichweite voneinander befinden, **dadurch gekennzeichnet, dass**, wenn sich die Vorrichtungen in Bezug auf den ersten Kanal außer Reichweite voneinander befinden, das Verfahren umfasst, in der zweiten Vorrichtung (MOB):
- einen Schritt des Sendens, in welchem die zweite Vorrichtung an die erste Vorrichtung über den zweiten Kanal wenigstens einen Befehl zur Änderung der Periodizität des Sendens (T1) der Nachrichten (MSG), welche die Ortsbestimmungen (LOC2) des Objekts enthalten, sendet,
- einen Schritt des Empfangs, über den zweiten Kanal, der Nachrichten gemäß der geänderten Periodizität.

12. Datenverarbeitungsvorrichtung (MOB), "zweite Vorrichtung" genannt, die in der Lage ist, mit einer anderen Datenverarbeitungsvorrichtung, "erste Vorrichtung" genannt, über Kommunikationskanäle zu kommunizieren, von denen ein erster Kommunikationskanal eine erste Reichweite aufweist und ein zweiter Kommunikationskanal eine zweite Reichweite aufweist, die größer als die erste ist, wobei die erste Vorrichtung ein Lokalisierungsmodul aufweist, das verwendbar ist, wenn sich die Vorrichtungen in Bezug auf den ersten Kanal außer Reichweite voneinander befinden, **dadurch gekennzeichnet, dass** sie umfasst:
- ein Sendemodul, das geeignet ist, wenn sich die Vorrichtungen in Bezug auf den ersten Kanal außer Reichweite voneinander befinden, über den zweiten Kanal an die erste Vorrichtung wenigstens einen Befehl zur Änderung der Periodizität des Sendens (T1) der Nachrichten (MSG) zu senden, welche die Ortsbestimmungen (LOC2) des Objekts enthalten,
- ein Empfangsmodul, das geeignet ist, über den zweiten Kanal Nachrichten gemäß der geänderten Periodizität zu empfangen.

13. Computerprogramm, welches geeignet ist, auf einer Vorrichtung, wie in Anspruch 12 definiert, ausgeführt zu werden, wobei das Programm Codeanweisungen umfasst, die, wenn sie von einem Prozessor ausgeführt werden, die Schritte des Verfahrens realisieren, die in Anspruch 11 definiert sind.

14. Datenträger, auf welchem wenigstens eine Reihe von Programmcodeanweisungen für die Ausführung eines Verfahrens nach Anspruch 11 gespeichert ist.

## Claims

1. Method for managing the operation of a data processing device (OBJ), called first device, capable of communicating with another data processing device, called second device, through communication channels including a first communication channel (RES1) having a first range and a second communication channel (RES2) having a second range greater than the first, the first device including at least one location module (MLOC2, MLOC3) suitable for use when the devices are out of range of one another relative to the first channel (RES1), the module being capable of transmitting, via the second channel, a plurality of messages including the locations (LOC2) of the object with a given periodicity, **characterized in that**, when the devices (OBJ, MOB) are out of range of one other relative to the first channel, the method comprises, in the first device (OBJ)
- a receiving step in which the first device (OBJ) receives, from the second device (MOB), via the second channel, at least one command for modifying the periodicity of transmission (T1) of the messages (MSG) including the locations (LOC2) of the object,
- a step of transmitting, via the second channel, messages with the modified periodicity.

2. Management method according to Claim 1, **characterized in that**, before the disconnection, the location module is inactive, and **in that** it is activated following the disconnection.

3. Management method according to Claim 1, **characterized in that**, following the disconnection, and before the receiving step, the first device transmits a message (MSG) to the second device via the second channel.

4. Management method according to Claim 2, **characterized in that** following the activation of the location module, called first location module, the first device receives, from the second device (MOB), a request for requesting the activation of another location module, called second location module, on the first device.

5. Method according to Claim 1, **characterized in that** the first device (OBJ) receives, from the second device (MOB), a limiting command capable of limiting the number of locations to be obtained by the location module.

6. Method according to Claim 1, **characterized in that** the first device (OBJ) receives, from the second device (MOB), a limiting command capable of limiting the use of the location module to a time range.

7. Method according to Claim 1, **characterized in that** the location module obtains a location on the basis of the second channel.

8. Device (OBJ), called first device, capable of communicating with another data processing device, called second device, through communication channels including a first communication channel having a first range and a second communication channel having a second range greater than the first, the first device including at least one location module (MLOC2, MLOC3) suitable for use when the devices are out of range of one another relative to the first channel, the module being capable of transmitting, via the second channel, a plurality of messages including the locations (LOC2) of the object with a given periodicity, **characterized in that** it comprises
- a receiver module capable of receiving, when the devices are out of range of one another relative to the first channel, from the second device, at least one command for modifying the periodicity of transmission (T1) of the messages (MSG) including the locations (LOC2) of the object,
- a transmitter module capable of transmitting, via the second channel, at least one message with the modified periodicity.

9. Computer program suitable for being implemented on a device such as defined in Claim 8, the program comprising code instructions which, when it is executed by a processor, carries out the steps of the method defined in Claim 1.

10. Data medium on which at least one series of program code instructions for the execution of a method according to Claim 1 has been stored.

11. Method for managing the operation of a data processing device (OBJ), called first device, capable of communicating with another data processing device, called second device, through communication channels including a first communication channel having a first range and a second communication channel having a second range greater than the first, the first device including at least one location module (MLOC2, MLOC3) suitable for use when the devices are out of range of one another relative to the first channel, **characterized in that**, when the devices are out of range of one other relative to the first channel, the method comprises, in the second device (MOB)
- a transmitting step in which the second device transmits, to the first device, via the second channel, at least one command for modifying the periodicity of transmission (T1) of the messages (MSG) including the locations (LOC2) of the object,
- a step of receiving, via the second channel, messages with the modified periodicity.

12. Data processing device (MOB), called second device, capable of communicating with another data processing device, called first device, through communication channels including a first communication channel having a first range and a second communication channel having a second range greater than the first, the first device including a location module suitable for use when the devices are out of range of one another relative to the first channel, **characterized in that** it comprises
- a transmitter module capable of transmitting, when the devices are out of range of one another relative to the first channel, via the second channel, to the first device, at least one command for modifying the periodicity of transmission (T1) of the messages (MSG) including the locations (LOC2) of the object,
- a receiver module capable of receiving, via the second channel, messages with the modified periodicity.

13. Computer program suitable for being implemented on a device such as defined in Claim 12, the program comprising code instructions which, when it is executed by a processor, carries out the steps of the method defined in Claim 11.

14. Data medium on which at least one series of program code instructions for the execution of a method according to Claim 11 has been stored.
